Europäisches Patentamt

European Patent Office

Office européen des brevets

(11) Publication number: **0 196 218 B1**

## EUROPEAN PATENT SPECIFICATION

(45) Date of publication of patent specification: **27.10.93**

(51) Int. Cl.5: **H01S 3/03**, H01S 3/04, H01S 3/097

(21) Application number: **86302206.7**

(22) Date of filing: **25.03.86**

The file contains technical information submitted after the application was filed and not included in this specification

(54) **Laser apparatus and method.**

(30) Priority: **25.03.85 US 715458**

(43) Date of publication of application:
**01.10.86 Bulletin 86/40**

(45) Publication of the grant of the patent:
**27.10.93 Bulletin 93/43**

(84) Designated Contracting States:
**CH DE FR GB IT LI NL**

(56) References cited:
**US-A- 3 413 568**
**US-A- 3 586 996**
**US-A- 4 035 741**

**APPLIED PHYSICS LETTERS, vol. 39, no. 3, 1st August 1981, pages 203-205, American Institute of Physics, New York, US; H.J.J. SEGUIN et al.: "A magnetically stabilized radial discharge for a high-powered laser"**

**APPLIED PHYSICS B, vol. B35, no. 7, November 1984, pages 155-162, Springer-Verlag, Heidelberg, DE; D.M. ANTONIUK et al.: "Electrode design for a magnetically stabilized glow discharge"**

(73) Proprietor: **Macken, John A.**
**3755 Wallace Road**
**P.O. Box 696**
**Santa Rosa California 95402-0696(US)**

(72) Inventor: **Macken, John A.**
**3755 Wallace Road**
**P.O. Box 696**
**Santa Rosa California 95402-0696(US)**

(74) Representative: **Sturt, Clifford Mark et al**
**MARKS & CLERK**
**57-60 Lincoln's Inn Fields**
**London WC2A 3LS (GB)**

EP 0 196 218 B1

# Description

This invention relates to an apparatus for creating a gaseous discharge with a particular application to a new type of gaseous discharge structure for use as a laser amplifier section.

Possible designs for gas lasers have been severely limited by problems associated with keeping the gaseous discharge stable or with problems associated with filling a given laser cavity uniformly with a gaseous discharge. For example, transverse flow carbon dioxide lasers often exhibit an "arc out" problem where the electrical discharge changes from a glow discharge to an arc. Also, electric discharges can uniformly fill cylindrical tubes, but they do not fill other shapes. Furthermore, lasers which operate in a pulse mode at high gaseous pressures often require a special pre-ionization of the gas to achieve a uniform electrical discharge.

Previously, carbon dioxide lasers have fallen into five different categories. The most common construction is generally known as the "slow flow discharge tube". This approach is limited to a maximum power output of about 75 watts per meter. The second category of carbon dioxide laser apparatus is the "convective flow" laser which achieves an increased power output at the expense of increased complexity.

The third category is the "gas dynamic" laser which involves the use of rocket engine technology and, generally, is not suitable for commercial applications. The fourth category, known as the "TEA" laser, is suitable for pulsed laser applications only. The fifth category is the "wave guide" laser which, at this time, appears to be best suited to applications of less than 100 watts.

In the discussion of different categories of lasers, it should be noted that the primary difference between categories pertains to the construction method used for the laser amplification section. In other words, all common lasers contain various functional component parts, such as the optical systems, the electrical power supply, the laser amplification section, etc. However, the greatest difference in design occurs in the method of construction of the laser amplification section and, therefore, the various categories of lasers are defined by the design approach used in the laser amplification section. For instance, the amplification section can be used as a component of both a laser oscillator and a laser amplifier. For electrically excited gas lasers, the key component in the laser amplification section is the electrical discharge apparatus. Besides lasers, electrical discharges are key components in other fields. Presented herein is a new electrical discharge apparatus which makes possible a new laser amplification section design.

Prior art may be found in the following publications and patents:

(1) U.S. Patent No. 4,424,646 issued to the applicant herein for "Spiral Flow Convective Laser";

(2) C.J. Buczek, et. al., Applied Physics Letters, Vol. 16 No. 8 (1970);

(3) H.J.J. Sequin, et. al., Applied Physics Letters, Vol. 37, Page 130 (1980);

(4) H.J.J. Sequin, et. al., Applied Physics Letters, Volume 39, Page 203 (1981);

(5) C.E. Capjack, et. al., Journal of Applied Physics, Volume 52, Page 4517 (1981);

(6) C.E. Capjack, et. al., Applied Physics, Volume B26, Page 161 (1981);

(7) H.J.J. Sequin, et. al., Applied Optics, Volume 24, No. 9 (1985);

(8) N. Umeda et. al., Applied Optics, Vol. 19 Page 442 (1980);

(9) S. Ono et. al., Review of Scientific Instruments, Volume 54, Page 1451 (1983);

(10) U.S. Patent No. 3,435,373; and

(11) U.S. Patent No. 4,077,020.

Prior art 1 and 2 show a magnetic field to stabilize a cylindrical shaped electrical discharge in a cylindrical cavity in a transverse flowing gas stream.

Prior art 3, 4, 5, 6, 7 all were written by a group of authors with the University of Alberta in Canada. These articles deal with two different methods of making "magnetically stabilized electrodes". They use crossed electric and magnetic fields in an electric discharge but the discharge exhibits undesirable high power densities and low cooling rates which make it unsuitable for a diffusion cooled laser application. In comparison with these prior methods, the present invention may present the following distinguishing features:

1) orientation of the electric field vector perpendicular to the major bounding surfaces;

2) orientation of the magnetic field parallel to the major bounding surfaces in the discharge volume; and

3) use of electrically conductive major bounding surfaces.

Prior art 8 deals with a "Transverse Zeeman Laser." This class of laser differs from the present invention since it has a different cavity shape, objective, electric field configuration and magnetic field configuration. In this known laser, the electrical discharge is pressed against the wall of the discharge tube, thereby reducing the volume of the discharge.

Prior art 9 describes a small electro-magnetic pump in the side arm of the $CO_2$ laser for circulating gas.

In contrast to the prior art, this invention teaches a new method and apparatus for achieving a uniform electical discharge under conditions which would not normally be electrically stable or under conditions where the electrical discharge would not evenly fill a desired volume. Further teachings of this invention deal with applying this new type of electrical discharge to the construction of molecular lasers, such as $CO_2$ lasers. When applied to $CO_2$ lasers, the resultant laser represents a new category of $CO_2$ laser, which may be termed a "Macken Discharge Laser." The features include a laser apparatus which exhibits increased power output per unit length compared to the slow flow discharge tube laser, but without the necessity of the rapidly flowing gas of convective flow lasers.

With a view to providing an improved arrangement, according to a first aspect of the present invention there is provided a gas laser apparatus having a cavity, said cavity being bounded or partially bounded by two facing surfaces which are closely spaced and said gas laser apparatus being characterised by the provision of electrode means for establishing an electric field, at least one of said electrode means being elongated, and an electric discharge within the cavity, the orientation of the electric field being substantially parallel to the facing surfaces, and by the provision of means for establishing a magnetic field within the cavity with at least a major vector component substantially perpendicular to the facing surfaces, whereby in operation the electric discharge becomes a sweeping discharge between said two facing surfaces, said sweeping discharge being spread over a distance substantially greater than the separation of the said facing surfaces.

According to a second aspect of the invention there is provided a method of producing a substantially uniform broad area electric discharge said method comprising the steps of: providing a gas filled cavity between two relatively closely spaced surfaces; providing electrode means, at least one of said electrode means being elongated; and providing a magnetic field in a direction substantially orthogonal to said surfaces; said method being characterised in that it further comprises providing at least one electrical discharge within said gas filled cavity oriented with the electric field gradient thereof substantially parallel to said facing surfaces to enable said magnetic field to act on said electric discharge and to produce a generally stable sweeping electric discharge, said electric discharge being spread transverse to the electric field over a distance substantially greater than the separation between said facing surfaces, thereby creating a substantially uniform, broad area electric discharge.

Embodiments of the invention will now be described by way of example only and with reference to the accompanying drawings, in which:

Figure 1 is an exploded perspective view of the magnetically enhanced laser amplification section of the laser apparatus according to the invention;

Figure 2 is a cross-sectional view of the assembled laser amplification section of Figure 1 taken generally along line 2-2 thereof;

Figure 3 is a cross-sectional view of the assembled laser amplification section of Figure 1 taken generally along line 3-3 thereof, diagrammatically showing flow patterns of the electrical discharge at a magnetic field strength which retains discrete moving discharges;

Figure 4 is a cross-sectional view similar to Figure 3 which diagrammatically shows the electrical discharge at magnetic field strengths which eliminate discrete discharges and form a Macken discharge;

Figure 5 is a cutaway perspective view of an alternate embodiment of a magnetically enchanced laser amplification section which utilizes a closed loop electric discharge;

Figure 6 is a cross-sectional view of the laser amplification section of Figure 5, as viewed generally along line 6-6 thereof,

Figure 7 is a perspective view of another embodiment of a magnetic circuit design which uses interleaved magnets, and

Figure 8 is a perspective view of another embodiment of a magnetic circuit design which uses a single layer magnet.

In the drawings like reference numerals refer to like elements in the various figures.

The present invention provides a new type of structure for the amplification section of a laser apparatus. This structure includes a cavity which generally is bounded by two facing surfaces, closely spaced relative to the dimensions of the surfaces. A magnetic field is established in a direction perpendicular to the surfaces. The electrode design and cavity configuration shape the electric field so that the electric field is relatively narrow in the dimension parallel to the magnetic field compared to the dimension perpendicular to both the magnetic field vector and the electric field vector. The electrodes usually form two elongated electrode regions which extend over a distance considerably longer than the distance separating these two oppositely charged series of electrodes. When an electrical discharge is established across these elongated regions, the magnetic field exerts a force on the charged particles in the discharge which tends to move the discharge down the length of the electrode regions. Below a certain level of magnetic field strength this effect exhibits itself as a series of discharges moving down the two elongated electrodes. Above a certain magnetic field strength, the discharge becomes uniform and very stable. When the discharge is incorporated into a relatively narrow, broad area cavity, then the rate of heat removal from the gas can be greatly increased and it is possible to obtain substantially higher powers per unit length when dealing with thermally limited lasers, such as $CO_2$ lasers. In one embodiment two generally planar surfaces are used to form the cavity, while another embodiment utilizes two concentric cylinders to form the cavity.

Prior art glow electrical discharges tend to become unstable under many conditions which would otherwise be desirable for the construction of laser amplification sections. With such discharges, at high gaseous pressures or high currents, the discharges tend to form streamers or arcs which are not suitable for proper excitation of the gaseous medium. Therefore, pulsed gas lasers can benefit from this invention. In accordance with the present invention, the new type of discharge described herein uniformly distributes across a volume generally centred between two closely spaced plates, such as rectangular surfaces. With cooling of the plates, the heat removal rate from the gas between these plates is increased generally proportionally to the aspect ratio (width or circumference of cavity divided by plate separation) compared to an equal length gaseous discharge tube.

The ability to attain increased heat removal rates translates directly into higher output powers for thermally limited lasers, such as $CO_2$ lasers. With electrodes simply placed at either end of a structure, bounded by two flat plates, the gas discharge established would not fill the entire volume. Instead, the discharge retains an approximately circular cross-section, the diameter of which is determined by the separation of the two plates. The discharge will also have a tendency to wander, thereby further complicating the problem of extracting laser power.

If one were to attempt to make a laser utilizing flat plates with no additional sophistication in the discharge, the laser output power would actually be less per meter of length than is achieved by a discharge in a cooled cylindrical tube.

In discussing the preferred embodiments, the example will be given directed to the construction of discharge apparatus applied to a new type of carbon dioxide laser amplification section.

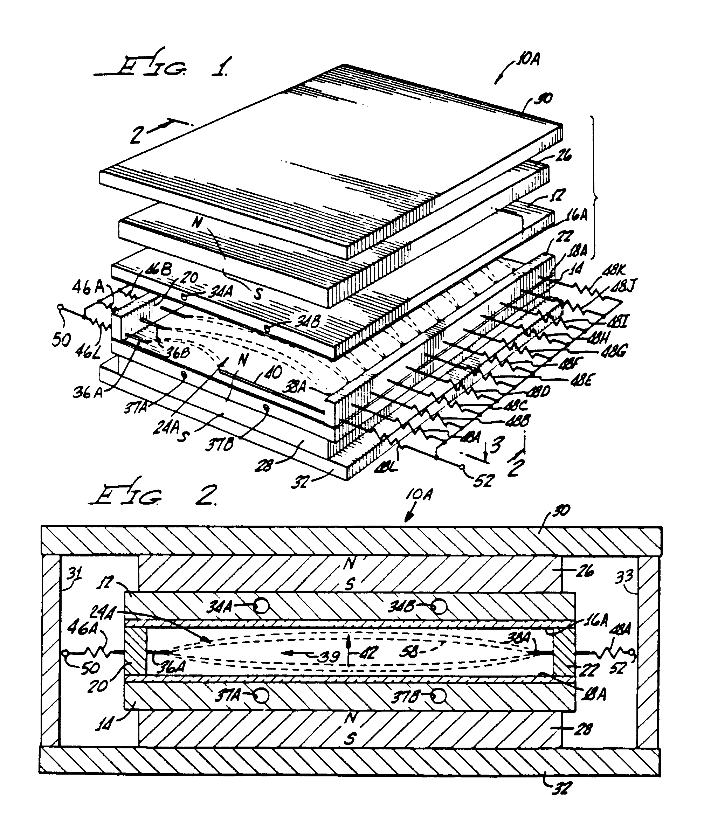

Referring to the drawings, and particularly to Figures 1 through 3, there is shown a discharge amplification section, generally designated 10A, of a laser apparatus. The section 10A is formed as an envelope, in the form of a generally box-like rectangular sandwich configuration including two facing surfaces 16 and 18 which are closely spaced relative to their width and length surface dimensions. The surfaces are sufficiently electrically insulating to perform the functions which will be discussed later.

Preferred materials for surface 16A and 18A are porcelain, ceramic or glass. Surfaces 16A and 18A are backed by plates 12 and 14 respectively. These plates provide structural support for surfaces 16A and 18A and therefore could be made of any suitable structural material, including possibly the same material as surface 16A and 18A (such as glass). However, since it is desirable for plates 12 and 14 to also thermally conduct heat, it is desirable for these plates to be of metal. In a preferred embodiment, plates 12 and 14 are made of a ferromagnetic material such as steel, for reasons to be explained later.

The plate-like members 12 and 14 are illustrated as being formed of a material which has an adequately high thermal conductivity and which is sufficiently thick for the formation therein of thermal cooling channels. Thermal cooling channels 34A and 34B are formed in plate 12, and channels 37A and 37B are formed in plate 14. Tubes, not shown, are connected to these cooling channels and a cooling liquid is circulated through these openings so as to cool plates 12 and 14. In this manner, through thermal conduction, surfaces 16 and 18, which form a major portion of the walls of the cavity 24, are cooled.

It should be understood that any convenient method may be employed for providing the surfaces 16 and 18 with appropriate cooling, and those shown and described are illustrative.

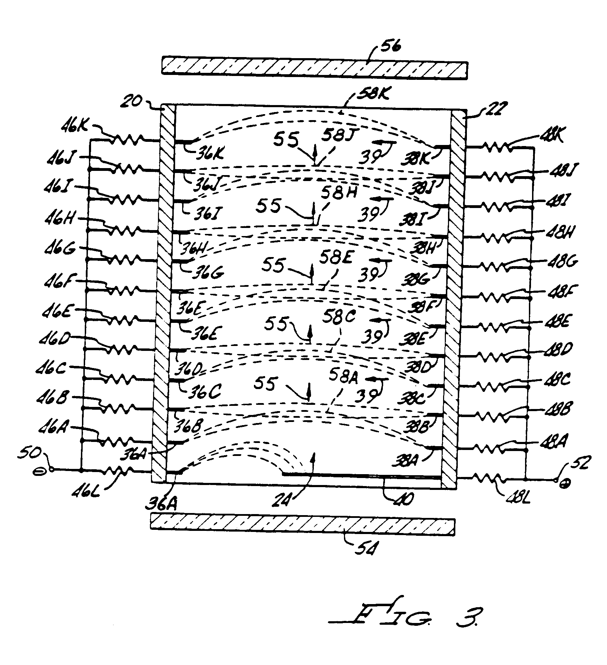

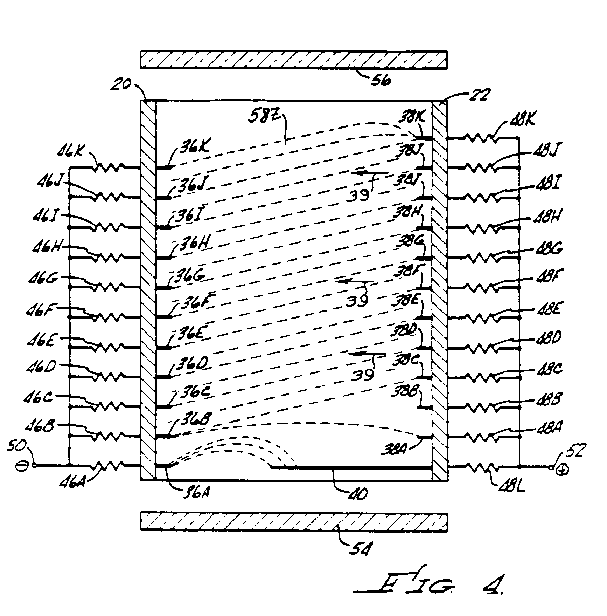

Surfaces 16A and 18A are held apart by supporting members 20 and 22, which are positioned such as to form the generally rectangular cavity 24A. While this cavity has two open ends, it is assumed that a vacuum tight envelope is formed by other members not strictly part of the electric discharge apparatus being described. For example, laser mirrors 54 and 54 (Figure 3) could form part of the vacuum envelope. The volume of cavity 24A is filled with a gas, which in this example is a carbon dioxide, nitrogen and helium mixture.

Suitable magnetic field producing means are provided by permanent magnets 26 and 28.

The magnets 26 and 28 are arranged and positioned with the polarity aligned in a direction generally perpendicular to the plane of the plates 12 and 14. That is, as shown in Figures 1 and 2, the north pole of the lower magnet 28 abuts the plate 14, while the south pole of the upper magnet 26 abuts the surface of plate 12. These polarities are shown by conventional designations "N" and "S" marked on the magnets 26 and 28 in the drawings. The arrow #42 in Figure 2 indicates the magnetic field direction. The magnets 26 and 28 preferably have a size or dimension approximating the size or dimension of the plate-like members 12 and 14 for the sake of easiest magnetic field generation. The magnets 26 and 28 are permanent magnets which may be formed of relatively inexpensive barium iron oxide ceramic materials, or the like. It is to be understood that other devices may be used for generating the required magnetic field such as other permanent magnets, DC electromagnets or AC electromagnets. The objective is to generate a field within cavity 24A with at least a major vector component perpendicular to the surfaces 16A and 18A. If the magnetic field produced by the magnets 26 and 28 needs to be made more uniform, it has been found that making plates 12 and 14 from steel helps to make the magnetic field very uniform.

In a preferred embodiment, steel plates 30, 31, 32, 33 (Figure 2) form a generally rectangular tube and surround the magnets and other parts of the struture. Plates 31 and 33 are not shown in Figures 1, 3 and 4, (to better illustrate the other components) but plates 31 and 33 are generally the same length as 30. This ferromagnetic tubular structure (shown rectangular, but other shapes can be used) forms a magnetic circuit giving a low magnetic reluctance path for the magnetic lines which emanate from the north pole of 26 and enter the south pole of 28. This magnetic circuit is part of a preferred embodiment, but not absolutely necessary to the function of the invention because the function of the magnetic circuit is to minimize the size and expense of the magnets 26 and 28, as well as confine the magnetic field to structure 10A. Eliminating plates 30, 31, 32, and 33 would require magnets 26 and 28 to be much stronger.

As shown in Figure 3, it is important to provide a gap between plate 12 and magnetic circuit elements 31 and 33. Plate 14 should be similarly configured. If these gaps were eliminated, there would be the magnetic equivalent of an electrical "short circuit" and no magnetic field would appear in cavity 24A.

The side wall members 20 and 22 are preferably formed of a suitable non-magnetic material. Wall members 20 and 22 should also be electrically insulated from each other. These side wall members maintain the spacing between surfaces 16A and 18A, and support the electrode structure, which includes first and second sets of electrodes. These sets of electrodes are generally designated 36 and 38, with electrodes of each set bearing supplementary letter suffix designations, i.e., 36A, 36B, etc. The set 36 of electrodes are depicted as being generally parallel, equally spaced rod-type electrodes, arranged in parallel with one another, and extending through and supported by, side wall member 20. Similarly, electrode set 38 includes electrodes which are generally parallel to one another and in axial alignment with the corresponding electrode of set 36. The electrode set 38 extends through and is supported by side wall member 22. However, the electrodes do not make electrical contact through side wall members 20 and 22. It is to be understood that the electrodes depicted here are examples only. Within the general objective of forming two elongate electrode regions, there is great flexibility as to the electrode design. In particular, if the set 36 of electrodes are negatively charged cathodes operating at certain gas pressures, then larger surface area electrodes may be substituted.

By reference to Figure 3, it can be seen that the electrodes of each set 36 and 38 extend into the cavity 24A for the same distance and that they are used to form an electric field designated 39. Adjacent to the lower end of the cavity 24A, as viewed in Figure 3, an auxiliary electrode 40 is provided. The electrode 40 is representative of single or multiple electrodes used to initiate the electrical discharge. This function will be discussed later.

If necessary, the electrodes are provided with suitable ballast devices such as resistors. Resistors 46A-46L are coupled in series with electrodes 36A-36K respectively, while resistors 48A-48L are coupled in series with electrodes 38A-38K and 40 respectively. The resistors designated 46 have the other ends thereof coupled together for electrical connection to a terminal 50 of a suitable power source. Resistors designated 48 likewise have the other ends thereof coupled together for electrical connection to the other terminal 52 of the power source. In this illustration, terminal 50 is negatively charged and terminal 52 is positively charged. The electrical and magnetic polarities used are examples only.

It should be emphasized that resistors 46A-46L and 48A-48L define elongated electrode regions. It may also be possible to replace the multiple linear array of electrodes 36A-36K or 38A-38F with a single electrode, such as a rod made of a suitable electrical conductor. For optimum performance, the rod electrode should be placed so that it approximately passes through the points in space defined by the tips of electrodes 36A-36K, thereby extending over the same elongated electrode region. Similarly, another rod may be used to replace multiple electrodes 38A-38K. These rod electrodes should be connected to the positive and negative terminals of the power source respectively. It is to be understood that the optimum electrode configuration can be determined experimentally by those skilled in the art.

In Figure 3, the laser mirrors 54 and 56 are shown adjacent to opposite ends of the cavity 24A. These mirrors are shown as a point of reference only. The preparation of mirrors optimized for this rectangular geometry is within the capabilities of persons skilled in the art. Alternatively, the ends of the cavity 24A could be closed with totally transparent windows positioned at the locations of mirrors 54 and 56. An externally generated laser beam may be passed through the windows so as to be amplified by the amplifier section 10A. In any event, it is to be understood that the cavity 24A is suitably sealed to act as an envelope containing the gas mixture therein.

Referring again to Figure 3, a direct current power source is connected to terminals 50 and 52, with terminal 52 being positive. The direction of the magnetic field generated by magnets 26 and 28 is as indicated by the pole designations shown in Figures 1 and 2. In these conditions the close proximity of electrode 40 to electrode 36A rapidly initiates an electrical discharge at the end of the cavity 24A where the action of the magnetic field results in continuous generation of new discharges. When the electric field 39 creates transverse electrical discharge 58A-58K between the various other electrodes of the first and second sets electrodes (36,38), the action of the magnetic field is such as to exert a force on the discharge. At least in a selected volume of the cavity where correct conditions are established, the action of the magnetic field is to cause these discrete discharges to sweep in the direction indicated by the arrows 55 shown in Figure 3. This condition can be termed "discrete moving discharges".

At one level of magnetic field strength relative to cavity geometry and gas pressure, the electric discharge appears to spread to fill the cavity. However, the electrical discharges established between the electrodes will have rapidly moving voids between individual moving discharges, such as depicted in Figures 1 and 3. These discrete discharges are designated 58A, 58C, 58E --- 58K.

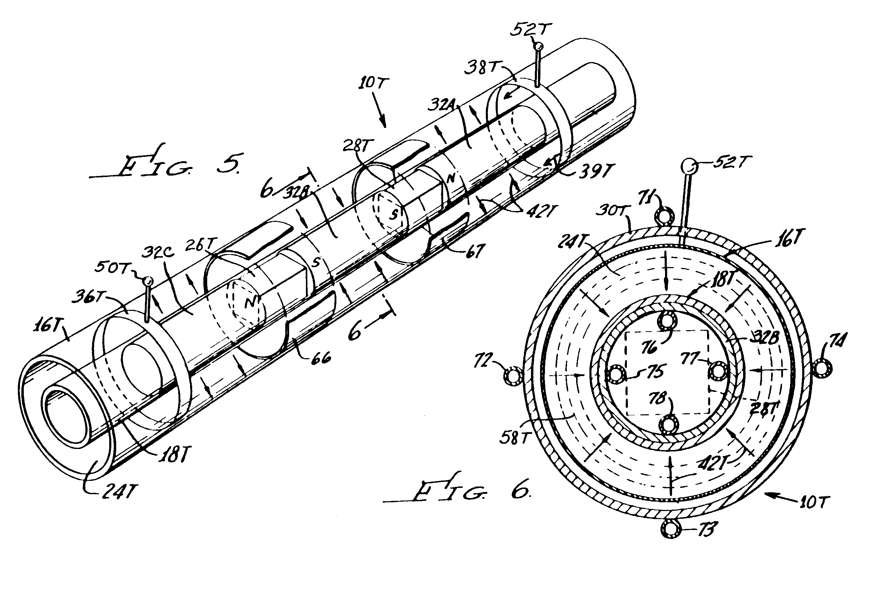

At a magnetic filed strength higher than the level depicted in Figure 3, the discrete discharges merge into one merged homogeneous discharge, such as 58Z depicted in Figure 4. The dashed lines 58Z in Figure 4 represent an estimate of the general paths taken by electrons in electric field 39 when the condition of merged homogeneous discharge has been reached. This will be referred to as "Macken discharge". The general name which includes both the "discrete moving discharge" and the "Macken discharge" is a sweeping discharge because in both discharge conditions, the electrons are swept sideways by the action of the magnetic field.

Both of these discharge conditions have been experimentally observed. When there exists a high magnetic field strength which produces rapidly moving discrete discharges, the speed with which these discharges move depends on the magnetic field strength provided by the magnets 26 and 28, as well as the pressure and composition of the gas mixture within the cavity 24.

For a mixture of gas normally used in carbon dioxide lasers of 17% carbon dioxide, 23% nitrogen and 60% helium, the formula for the speed of the movement of the electrical discharge within the cavity 24 is as shown below:

$$V = 125\ B/P \qquad \text{(Equation 1)}$$

where:

V is the velocity of the discharge in cm/sec.;
B is the strength of the magnetic field in gauss
P is the total gas pressure in torr.

By way of illustration, if the gas is 1893 Pa (14.2 torr) and the magnetic field strength is 0.03T (300 gauss), the speed of transverse motion of the electrical discharges would be 26 meters per second. The above formula is based on measurements where a single discharge moves up stream against a flowing gas. At magnetic field strengths which establish a Macken discharge, experiments have shown that the above formula no longer applies because the leading edge of a discrete discharge moves at a faster rate than the trailing edge. This means that the discharge Spreads in width as it travels down the cavity. This appears to provide the mechanism for discrete discharges to merge into one homogeneous discharge.

The magnetic force acts primarily on the electrons in the electrical discharge. This is because the electrons are moving many times faster than the much heavier ionized atoms and molecules. The formula for the force ($F_m$) exerted by a magnetic field of strength B of a particle of charge Q travelling with a velocity V is given by the formula:

$$F_m = QV \times B \qquad \text{(Equation 2)}$$

Where x is the mathematical notion referred to as 'cross'.
From this formula, it can be seen that the force is proportional to the velocity V of the charged particles; therefore, since the electrons are traveling more than 100 times faster than the positively charged ions, the primary force exerted by the magnetic field appears on the electrons, and in turn, this force is proportional to the velocity of individual electrons.

At a magnetic field strength where discrete discharges are rapidly moving down the length of the electrodes, hypothesis predicts there would tend to be a charge distribution across individual discharges. The electrons should tend to congregate near the leading edge of the moving discharge while the positively charged ions should tend to be dragged along at the trailing edge of the moving discharge. With increasing magnetic field strength, the hypothesis predicts that; the rate of motion of the discharge should increase, the angle of the discharge relative to the electric field vector should change, and the separation between the negatively charged leading edge and the positively charged trailing edge in an individual discharge should increase. Above some critical magnetic field strength threshold, the electrons at the leading edge of one discharge should bridge the gap between adjacent discharges and catch up with the positively charged ions on the trailing edge of the previous discharge. At this point, the discharges have merged and become homogeneous.

This is the condition 58Z depicted in Figure 4. For manufacturing a high powered $CO_2$ laser, it is desirable that the homogeneous Macken electrical discharge depicted in Figure 4 be achieved. However, this is not absolutely necessary since the rapidly moving discrete discharges still create a thermal homogeneity in the heating of the gas. This occurs when the time interval between the passage of individual discharges past a point in space in the cavity 24A is less than the thermal relaxation time of the gas within the cavity 24A. If this condition is reached, then the heat removal rate, and possibly the potential output power, will be nearly maximized. Therefore, it will not be necessary to obtain further homogenization by causing the individual discharges to merge. However, the unsaturated gain will be higher when the discharges have merged; therefore, it would be easier to extract the laser power from the excited gas under the conditions where the discharges have merged and formed one continuous discharge.

It is possible to calculate a range of magnetic fields for generating useful sweeping discharges. The lower limit for the required magnetic field to get some beneficial effect is based on the criteria that discrete moving discharges must be moving fast enough that there starts to be some spreading of the heat in the gas. Previously stated Equation 1 gives a general formula for the velocity of moving discharges in a $CO_2$ laser gas.

The thermal time constant T (in seconds) of a $CO_2$, $N_2$, He gas mixture between two parallel plates with separation distance L (in centimeters) at pressure P (in torr) is given by the following simplified and approximate equation:

$$T = .0001 \ PL^2 \qquad \text{(Equation 3)}$$

The length of time (t) it takes for a discharge moving at velocity (v) to sweep a distance (d) is:

$$t = d/v \qquad \text{(Equation 4)}$$

If "t", in Equation 4, is set equal to the thermal time constant "T" from equation 3 and if "d" is set to equal the cavity separation dimension L from equation 3, then substituting equation 1 for velocity "v" in equation 4, the solution to this equation is: B = 80/L. This shows that 0.008T (80 gauss) is needed to cause the discharge to sweep a distance equal to the cavity separation distance in one thermal time constant for a 1 cm wide cavity. This value is independent of pressure.

Also, from experimental observations, a reasonable condition for defining the minimum magnetic field for the claimed effect in a 1cm separation cavity is 0.0008T (80 gauss). While 80 gauss will not necessarily produce a uniform thermal heating of the gas, 80 gauss does produce a distinct thermal wake left behind moving discharges for a $CO_2$, $N_2$, He gas mixture. In other, yet untested, gases the constants will differ, but also from experiments, 80 gauss is considered to be a good standard for the initiation of the effect.

The Macken discharge condition starts at a higher magnetic field which depends on many factors. These factors include: gas pressure, current density, cavity configuration and electrode configuration. The required threshold magnetic field needs to be determined experimentally.

At the opposite extreme, the maximum suitable magnetic field strength can reasonably be set at the saturation flux density of iron which is about 2.2T (22,000 gauss).

In one experiment, a cavity similar to that shown in Figure 1 was constructed, the separation between the tips of the electrodes 36A, 36B, etc., and electrodes 38A, 38B, etc. was 15 centimeters and the separation between surfaces 16 and 18 was 1.2 centimeters. The length of the series of anodes or cathodes was 45 centimeters and the separation between individual electrodes was 1.25 centimeters. In this experiment, the magnets used were ceramic magnets 9 cm wide, 27 cm long, and 1.25 cm thick. As shown in Figure 2, two rectangular steel plates 31 and 33, parallel to plates 20 and 22 in Figure 1, were added to the outside of the structure thus magnetically connecting steel plates 30 and 32, thereby increasing the magnetic field strength in the cavity 24A.

In this experiment, the gas pressure was initially about 18 torr for a standard laser mix of carbon dioxide, nitrogen and helium. The discharge voltage was 1,800 volts at a current of about 1 amp. The resistors 46 were 20,000 ohms each and resistors 48 were 10,000 ohms each. At a magnetic field strength of 0.15T (1,500 gauss), the discharges were found to have completely merged as indicated by monitoring the current across an individual resistor, such as resistor 48E. Also, visual inspection revealed good uniformity. When the magnetic field strength was reduced to 0.075T (750 gauss) by removing a magnet layer corresponding to magnet 26 in Figure 1 (forming a structure analagous to Figure 8), the discharge was found to still be completely uniform. When all the magnets were removed, it was found that there was still a residual magnetic field remaining in the steel structure of about 0.0025T (25 gauss). With the magnetic field strength reduced to 0.0025T (25 gauss), individual moving discharges were observed both visually and by monitoring the current flow in individual resistors. These discharges were moving as predicted and caused the current to fluctuate in an individual resistor as a discharge moved past that particular resistor. The separation between discharges was perhaps 10 cm in this experiment.

In this experiment, it was also found that a high magnetic field strength, such as 0.15T (1,500 gauss) at 2400 Pa (18 torr), can exert such a strong force on the electrons that very little current flows to the first few anodes 48A, 48B and 48C because the discharge leaving the first cathods 46A actually travels at an angle dependent on the magnetic field strength and the gas pressure. Increasing the gas pressure to 4666 Pa (35 torr) or reducing the magnetic field strength to 0.075T (750 gauss) reduced the angle for the average electron travel relative to the electric field so that the first few anodes began receiving some current.

The concept that the electrons are actually traveling at an angle to the electric field vector 39 is depicted in Figure 4 by discharge lines 58Z. The magnetic force exerted on the electrons was previously given as $F_m = QV \times B$. It is also well known that the electric field force ($F_e$) is given by the following formula:

$$F_e = QE$$

where:
Q = the charge
E = the electric field strength
Therefore, the ratio of the magnetic field force to the electric field force is given by:

$$F_m/F_e = V \times B/E$$

The velocity of the electrons in electrical discharges has been measured for various conditions. A typical range for the electron drift velocity is from 50,000 M/sec to 15.000 M/sec.

If we assume; an average speed of the electrons of 70,000 M/sec, a magnetic field strength of 0.075 weber square meter (750 gauss) and an electric field strength in the discharge (ignoring the cathode drop) of 9,200 volt per meter, then substituting into the above formula gives a ratio of the magnetic force to the electric force of about 0.57. This would indicate that the electrons travel at an average angle to the electric field vector of about 30 degrees, but this is only the centre of a wide angle distribution. Generally, this type of an effect was observed experimentally and is depicted in Figure 4.

It was found that it was not necessary to have individual resistive ballast on all the electrodes, as shown in Figures 1 through 4. Experiments were conducted where all of the cathode or anode electrodes were connected in parallel. While this tended to concentrate the discharge in the downstream end of the cavity 24A, the discharge was stable. Structures have also been tested where either one long rectangular anode bar replaced multiple anodes 38A, 38B, etc., or one long cathode bar replaced multiple cathodes 36A, 36B, etc.

To minimize or eliminate the space between moving discharges, it is important to provide a sufficiently high electric field strength to continuously generating new discharges at the end of the struture which has to "launch" discharges due to the action of the magnetic field. In Figure 3, the electrode 40 is closer spaced to the oppositely charged electrodes rather than the other electrodes in group 38. Ths electrode 40 is representative of launcher electrodes. Optional ballast resistor 48L is provided in this electrode. It is also possible to eliminate electrode 40 and to generate the necessary electric field strength to initiate new discharge between electrodes 38A and 36A. To do this, the power supply voltage and the ballast resistor size must be sufficient to initiate a discharge when current stops flowing to anode 38A.

In lieu of DC power, alternating current power may be applied at terminals 50 and 52, in which event it may be necessary to have launcher electrodes similar to electrode 40 at each end of the structure. In lieu of the electrode sets 36 and 38 on the side walls 20 and 22, the electrodes may also be positionsed at opposite ends in non-interference with the optics. In this case, the direction of electrical discharges would change by 90 degrees, but electrical discharges would still flow in a direction perpendicular to the applied magnetic field. As another variation, electromagnets may replace the permanent magnets, with multi-phase AC power applied thereto to generate moving magnetic fields.

The above description and the arrangements shown in Figures 1 to 4 relate to a group of embodiments which can be referred to as "open loop" discharges. That is, the discharge takes place between two electrode regions, requiring the initiation of electric discharges at one end of the pair of electrodes with termination of the discharge at the other end of the electrode pair. Open loop discharges generally have electric field equipotential lines that leave the cavity without closing on themselves. The electric field arrows 39 are the electric field gradient, also known as the electric field vector. The equipotential lines are perpendicular to the electic field vector.

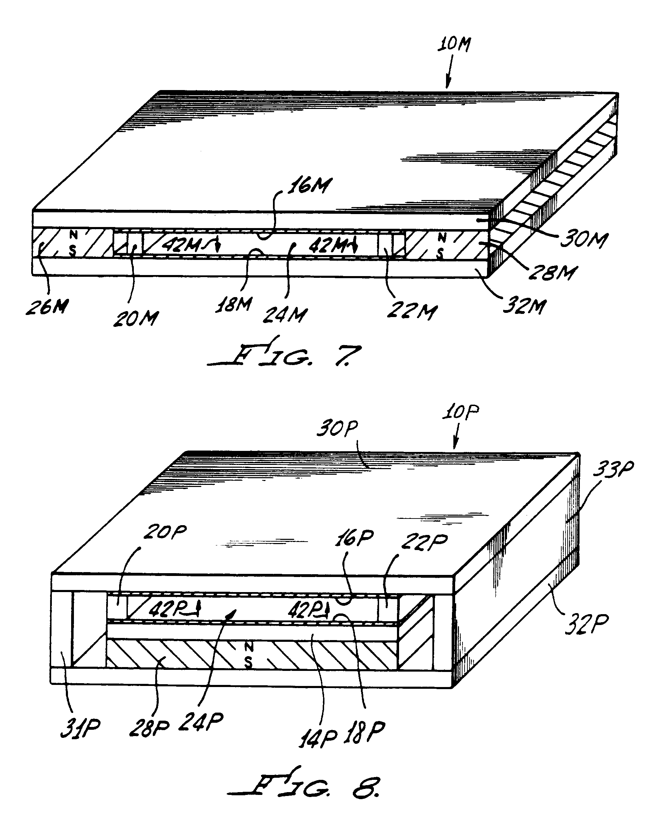

There is another group of sweeping discharges known as "closed loop discharges". These are depicted in Figures 5 and 6. The closed loop discharges do not need continuous initiation of new discharges. The discharges sweep around a closed loop forming the equivalent of an infinitely long open loop system. The electric field equipotential lines also form closed loops inside the cavity in this type of structure.

Referring now to Figures 5 and 6, taken together, there is shown an alternate embodiment in which coaxial, cylindrical geometry is used rather than the planar parallel geometry of Figures 1 through 4. In Figures 5 and 6, the cylindrical cavity 24T is bounded by two coaxial surfaces 16T and 18T corresponding to surface 16 and 18 in Figures 1-4. Surfaces 16T and 18T are relatively closely spaced compared to the circumference and axial dimensions. Surfaces 16T and 18T are sufficiently electrically insulating so that an electrical discharge would tend to pass through the gas contained in cavity 24T. Inside surface 18T, there are axially aligned and spaced ferro-magnetic cylinders 32A, B, C, as shown in Figure 5. These ferro-magnetic cylinders are magnetized by permanent magnets 26T and 28T in axial alignment therewith in the spaces there between. The magnets 26T and 28T are positioned with repelling polar orientation, as shown at either end of 32B. The magnetic field 42T for these magnets is shown in Figure 5. Thus, for example, magnetic cylinder 32B serves as the south pole of the magnet over its length, while cylinders 32A and 32C serve as the north pole of the magnet over their entire length.

In Figure 5, the outside structure has been omitted for clarity of presentation of the interior details. In Figure 6, this outside structure is shown. In Figure 6, cylinder 30T is a ferro-magnetic cylinder which runs the length of cylinder 16T except for appropriate openings to allow for terminals 50T and 52T which are connected to electrodes 36T and 38T.

Cylinder 30T serves a dual purpose since it forms a part of the magnetic circuit which connects the south pole of the cylinder 32B to the north pole of cylinders 32A and 32C and it is also part of the cooling. The radially extending arrows 42T in Figure 5 and other unmarked arrows inside the cavity 24T in both Figures 5 and 6 indicate the local direction of the magnetic field extending between cylinders 32A, 32B, and 32C and the outside cylinder 30T shown in Figure 6. This magnetic field is analagous to magnetic field 42 in Figure 1 to 4. Similarly, arrows 39T show the broad area electric field analagous to 39 in Figures 2 to 4. Also, cylinder 30T includes four water cooling tubes 71-74, inclusive, which make thermal contact with this metallic cylinder. These tubes are representative of a cooling method which may be employed for cooling surface 16T. In this case, there would be thermal conduction from the cooled tubes 71-74 through the cylinder 30T and, ultimately, to the surface 16T.

Similarly, the inside metallic cylinders 32A, 32B and 32C are cooled by tubes 75-78 shown in Figure 6. Once again, for simplicity, these inside cooling tubes are not shown in Figure 5. This cooling method is an example only. Many other cooling methods are possible. Also, in cases such as intermittant operation, no liquid cooling may be required. In operation, when a voltage is applied to terminals 50T and 52T, a broad area electric field 39T and an electrical discharge 58T is established through the cavity 24T between electrodes 36T and 38T. These electrodes are analogous to the 36 series and 38 series electrodes, therefore they can also be segmented and are considered elongated electrode regions. The radial magnetic fields cause the discharge to rapidly rotate. If the magnetic field is sufficiently strong, the discharge 58T will form a circle when viewed from the angle shown in Figure 6. The discharge can become a Macken discharge similar to the process previously described for the parallel geometry described in conjunction with Figure 4.

It is important to understand that several elements must co-operate to achieve sweeping discharges. These elements are the cavity shape, the gas, the magnetic field and the electric field associated with a discharge. The description presented herein presumes that the reader starts with a knowlege of the interrelationships of these elements in conventional discharge structures. The following texts are given as reference and are included herein:

1) M. E. Hirsch, "Gaseous Electronics" Volume 1 1978, Academic Press, New York (Chapters 1 and 2).

2) J. D. Cobine "Gaseous Conductors" 1957, Dover Publications, New York (Chapters 7 and 8).

3) E. W. McDaniel, "Collision Phenomena in Ionized Gases" 1984, John Wiley and Sons, New York (Pages 506-512).

4) G. Francis "Ionization Phenomena in Gases" 1960, Academic Press, New York (Pages 123-128).

Of particular interest in reference texts 1 and 2 is the information dealing with the breakdown voltage gradient, the voltage-current curve, and the requirements for stabilizing a convention discharge. References 3 and 4 deal with general effects of a magnetic field on an electrical discharge.

The co-operative feature of these four elements is especially important in achieving a Macken discharge. It is possible to adjust the parameters of some of the elements to compensate for less than ideal conditions on other elements. For example, the cavity shape and the electrodes together control the electric field shape. The electric field shape must at least permit the formation of a broad area sweeping discharge, but ideally, through the use of multiple ballasted electrodes and careful shaping, the electric field should encourage the spreading of the electric discharge. However, inadequacies in this ideal can be offset by increasing the magnetic field strength or an adjustment in the gas composition or pressure.

As shown in Figure 5, optional thin metallic cylindrical surfaces 66 and 67 are placed in contact with the inside of surface 16T at the positions adjacent to magnets 26T and 28T, respectively. These cylinders 66 and 67 serve as electrodes and provide one means for the rotating electric discharges to deal with the anomaly that occurs when the direction of the magnetic field is being reversed, for example, between cylinders 32C and 32B. For example, if the combination of the electric field direction and the magnetic field direction caused the discharge to rotate clockwise in the region near cylinder 32C, then this electrical discharge would terminate on the near surface of electrode 66. The discharge would then re-emerge on the other end of electrode 66 and be rotating counter clockwise as the discharge passed through the region near cylinder 32B. The discharge would then terminate on the near edge of electrode 67 and reappear on the far side of the electrode 67, once more rotating clockwise and terminating in electrode 38T.

It would, of course, be possible to eliminate or replace internal electrodes 66 and 67 with additional electrodes which are thinner and which have external connections similar to those shown on terminals 52T and 50T. It is currently believed that if there is a reversal in the direction of the magnetic field (such as shown in Figure 5, between cylinders 32B and 32C, for example) that it is acceptable, but not preferred, to have the electrical discharge pass through the region where the reversal takes place. An experiment has shown that this region tends to cause an instability since there is no magnetic homogenizing of the discharge in this region. Those skilled in the art will recognise that, in the cylindrical geometry, radial magnetic fields are of necessity accompanied by periodic reversals in the direction of the magnetic field.

While Figures 1-6 show the major design philosophy, there are variations which are possible. For example, Figures 7 and 8 show design variations to the magnetic circuit used in Figure 2 so as to supply a magnetic field to a generally rectangular cavity similar to that shown in Figures 1-4.

Figure 7 shows only the parts which form the magnetic circuit components of the structure and a few other components needed for clarity. It does not show any of the electrodes, wires, cooling, discharge, etc., which do not form part of the magnetic circuit. In Figure 7, the numbering corresponds to comparable components in Figures 1, 2 and 3 except that the letter "M" is added after the number. Therefore, the cavity 24M is formed between relatively closely spaced facing surfaces 16M and 18M.

Support members 20M and 22M form walls of the cavity. Ferromagnetic (preferably steel) plate 30M performs the function of both plates 30 and 12 in Figure 2. Similarly, plate 32M performs the function of plates 32 and 14 in Figure 2. Magnets 28M and 26M are placed between ferromagnetic plates 30M and 32M. The ferromagnetic plates transfer the magnetic field generated by said magnets and distributes relatively evenly the magnetic field in cavity 24M, with the magnetic field vector shown by 42M. Note that this structure does reverse the direction of the magnetic field vector inside the cavity compared to Figure 2, even though both figures are depicted with the north pole of the magnet up.

In Figure 7, the cavity dimension in the direction of the magnetic field vector is shown as being generally the same as the magnet dimension in the magnetized direction. If it is desired to make the magnet thicker or thinner than the cavity, it is possible to either machine plates 30M and 32M to accommodate the height difference. Alternatively, the magnets may be placed alongside of plates 30M and 32M with the use of steel plates as magnetic coupling elements to transfer the magnetic field into plates 30M and 32M.

Figure 8 also shows only the elements of the structure related to the magnetic circuit. Figure 8 is very similar to Figure 2. The numbering of comparable parts is the same except for the use of the letter "P". The major exceptions are that magnet 26 and plate 12 have been elimated. The dielectric surface 16P has been placed directly on plate 30P. In Figure 8, it should be noted that plate 14P could be made of any structurally suitable material. However, steel is the preferred material since steel also has the property of making the magnetic field in cavity 24P very uniform. Note that if steel is used for 14P, there should be a suitable gap between 14P and 33P or 31P to prevent a magnetic "short circuit".

The magnetic circuits described in Figures 1 to 8 have the same basic elements and purpose. The fundamental purpose is to: 1) establish a low reluctance (high permeability) path between the two poles of a magnet with (ideally) the only gap in the path being the cavity and the non magnetic materials associated with the cavity; 2) uniformly distribute the magnetic field in the cavity and orientate it generally perpendicular to the facing surfaces; 3) establish a sufficiently strong magnetic field in the cavity. To accomplish these objectives, all of the magnetic circuit designs include: 1) at least one magnet; 2) a cavity; 3) ferromagnetic pieces backing the relatively closely spaced facing surfaces of the cavity; 4) no major magnetic "short circuiting" connection to the ferromagnetic backing pieces which would substantially reduce the magnetic field in the cavity; 5) a magnetic circuit design which provides a ferromagnetic return path as needed to complete the magnetic circuit. From the teachings presented here, it is possible to make a variety of magnetic circuits including stacked, multi cavity laser structures.

Many other possible configurations which follow the teachings of this invention may be employed. For example, a cylindrical geometry could be made which would be analagous to wrapping the planar geometry cavity depicted in Figure 3 into a cylindrical geometry, with the cylindrical axis being parallel to the arrows shown on the discharges 58C and 58E. Additionally, another configuration would comprise cylindrical geometry which eliminates magnets 26T and 28T in Figure 5. This could be achieved by replacing them with cylindrical magnets which would be placed in the space between cylinders 30T and 16T in Figure 6. These cylindrical magnets would be radially magnetized with periodically reversed polarity to produce the same type of magnetic field distribution in the cavity as is depicted in Figures 5 and 6. In order to efficiently form a return path for the magnetic flux, it would be necessary to also replace ferromagnetic cylinders 32A, 32B, and 32C with one continuous ferromagnetic cylinder.

As previously stated, the apparatus described can be grouped into two classes. The design depicted in Figures 5 and 6 is representative of a class called "closed loop discharge apparatus." Figures 1-4 are representative of a class called "open loop discharge apparatus." Several variations on the closed loop discharge exist. For example, it is possible to combine two structures similar to Figure 7 with one placed one on top of the other. They would be oriented with the same magnetic polarity on the middle plate between the two cavities and the middle plate would also have a complete dielectric coating. With an external envelope to maintain the partial vacuum, it would be possible for the discharge to form a continuous loop by first sweeping through the top cavity then flipping into the bottom cavity to complete the loop.

Another variation would be an apparatus similar to Figures 1-4 where there is a reversal in magnetic field direction in the middle of the cavity along a line parallel to 20. The sweeping direction of the magnetic field would be reversed on either side of this magnetic reversal line. While even though the electric field equipotential lines are open loop, the electrical discharge has some similarities to a closed loop system because of the two opposite sweeping directions. Preliminary experiments indicate this design may have some stability problems.

Various cavity structures have been built and successfully operated as lasers. At least in $CO_2$ laser tests, lasing has only been achieved when the discharge has either reached the Macken discharge condition depicted in Figure 4 or at least operted under conditions which could be termed a partial transition to this discharge condition. At pressure ranges and current levels commonly used for $CO_2$ lasers, the transition from discrete moving discharges to Macken discharge can be dramatic and sudden. At magnetic field strengths slightly below transition, the discharge appears smooth to the eye, but current fluctuations can be seen by using an oscilloscope to monitor the current in an individual electrode. This current fluctuation increases in amplitude with increasing distance from the launcher until the fluctuations reach some maximum level. These do not appear to be arcs, but just discrete glow discharges which do not exhibit substantial spreading. If the gas is a laser gas, below the transition the discharge excited gas exhibits either no amplification or relatively low amplification.

When the magnetic field is increased in strength to a value above the transition threshold, there is a sudden change in discharge appearance. The light output from the discharge decreases from the previous level, the discharge voltage increases (perhaps 5 to 10%) and the current fluctuations usually show a distinct decrease in amplitude with increasing distance from the launcher, until some minimum fluctuation level is reached. Most dramatic, for a laser gas, the amplification jumps dramatically, usually resulting in a change from non-lasing to lasing when optimum reflectively mirrors are provided.

The above sharp transition occurs under optimum conditions where other sources of discharge instability are minimized. At less than optimum conditions, there is a transition zone between the two conditions where portions of the discharge can make a partial transition to a Macken discharge or perhaps rapidly flicker between the Macken discharge and the discrete moving discharge conditions. Other sources of instability can even introduce current fluctuations partially masking the transition. Even this transition condition is considered to be generally homogenous having a relatively evenly spaced discharge compared to the discharge distribution at substantially lower magnetic field strengths. For a laser gas, the clearest definition of the onset of the Macken discharge transition occurs when the laser amplication significantly increases when monitored over a range of magnetic field strengths and from a direction generally parallel to the discharge sweeping direction.

It is now possible to reflect on the conditions working to stabilize the discharge when the Macken discharge condition is reached. The explanation will be given with reference to a rectangular cavity, but it applies equally well to other shapes. The rectangular cavity has three dimensions which will be called: (e), parallel to the electric field; (b), parallel to the magnetic field; and (s), parallel to the sweeping direction. In this example, (b) is much smaller than (e), and (e) is smaller than (s). For curved cavity shapes, these dimensions can follow cavity contours.

The electric discharge has no problem being stabilized in the (e) direction, as long as some ballasting means are provided to limit the current within the gas. The electric discharge even moves around charged particles creating space charges and local voltage gradients as needed to form a stable condition in the (e) direction. In the (b) direction, the size of the cavity and the pressure of the gas have been chosen to stablize the discharge. This form of stabilizaion is commonly referred to as "wall stabilization."

The (s) dimension is chosen to be large. The electric field is usually a fairly uniform potential parallel to the (s) direction. Without any other means of dispersing the discharge in the (s) direction, the discharge will assume a width in the (s) direction roughly equal to the (b) dimension. This forms a fairly round discharge which will usually wander around in the (s) dimension. The restriction in the size of the discharge in the (s) dimension is believed to be because the heating of the gas lowers the discharge voltage gradient in a narrow channel. This is referred to as thermal confinement of the discharge.

The objective, therefore, is to introduce a new force in the (s) dimension to overcome this thermal confinement. A magnetic field is used to introduce this force on the discharge. For example, it has been calculated that at about 80 gauss for a 1cm cavity in the (b) direction, the force becomes sufficient to move the discharge through the gas at a rate where the discharge moves one wall separation distance (b) in a time equal to the thermal time constant of the gas. This condition still exhibits thermal confinement, but the efects have been reduced.

At a higher level of magnetic field, the magnetic forces on the discharge exceed the thermal confinement forces and a new stability condition is achieved for the (s) dimension. This new condition permits the discharge to spread and to become relatively broad and homogeneous.

All three dimensions have been stabilized.

It is important to realise that this stabilization has been achieved without introducing other sources of discharge instability. It is known that magnetic fields interacting with plasmas can generate several different modes of instability. (See G. Francis, "Ionization Phenomena in Gases." 1960 Academic Press Inc., New York [Chapter 7]). The apparent elimination of these problems may, at least in part, be due to the close proximity of the facing surfaces (and ferromagnetic backing plates) to the plasma.

The discussion of the theory has centered on discharges, but for certain laser applications, such as $CO_2$ and CO lasers, the real objective is to be able to increase the heat removal rate from the discharge heated gas. The cooled, close proximity surfaces perform this task. Some other types of gas lasers which are not thermally limited, depend on the walls to perform a key step in achieving laser gain. Therefore, in laser applications, the facing surfaces and cavity in general, simultaneously perform other duties.

While the preceding discussion has focused on the use of this technology on carbon dioxide lasers, it is to be understood that the techniques and structure shown and described allow design flexibility because it is now possible to force an electrical discharge to fill cavity shapes which previously could not be used. In addition, the homogenizing effect on the discharge may permit applications in high pressure lasers which previously required special ionization procedures.

In most ultra violet lasers, the importance of the heat removal has been largely eliminated, therefore, it is no longer necessary to deal with high aspect ratio cavities bounded by a first and second surfaces. For exmple, it may be possible to construct a pulsed ultra violet laser with a cylindrical tube which contains two parallel elongated electrode regions extending down the length of the cylinder and generally located near the cylinder walls being opposite each other across the axis of the cylinder. These two elongated electrode regions form a broad area electric field with the magnetic field extending perpendicular to the electric field vector and the length of the cylinder. The pulsed power supply energizing these electrodes could provide the needed electrical excitation.

Lastly, several points of terminology should be defined. The term "two facing surfaces" does not necessarily mean that there has to be a physical break between these surfaces. Also, it is to be understood that the addition of multiple layers or levels of cavities with "two facing surfaces" in each layer or level does not constitute a departure from the invention.

For this invention, the facing surfaces should be sufficiently electrically insulating that an applied voltage parallel to the surfaces produces an electric discharge through the gas. It is known that segmented electrically conductive pieces, can be used for a discharge cavity if they are cut up in short enough lengths and electrically insulated from each other. These pieces are an example of being "effectively electrically insulating" because they are electrically insulating to the electrical discharge.

In the range of alternative configurations, it is possible to have two facing surfaces which may not be parallel or evenly spaced. Therefore when making a generalised statement about these surfaces, it is desirable to be able to refer to the "median" between the facing surface. As used here, it describes the imaginary surface half way between the two facing surfaces. In describing the magnetic field requirement, it is preferred that the field is perpendicular to the facing surfaces. However, it is not essential that the magnetic fields be perpendicular to the surfaces as long as the magnetic field has at least a major vector component which is perpendicular to the local median.

The portion of the magnetic field vector component which is parallel to the median has an undesirable effect and is a waste of magnetic field strength, but it can be tolerated. The term "magnet" is use to denote any source of magnetic field including permanent magnets and electro magnets. The use of permanent magnets in the examples is only an illustration. The term "magnetic circuit" and "short circuit" are both making analogies with electrical circuits. The use of ballast resistors or "ballast" is to be understood as being representative of any current limiting means, such as ballast tubes, transistors or current limited power supplies. Even a cathode run at current densities called the "abnormal glow" exhibit a type of distributed ballasting. Even a single elongated electrode could conceivably have a resistive layer producing the equivalent effect of multiple ballasted electrodes.

## Claims

1. A gas laser apparatus (10) having a cavity (24), said cavity (24) being bounded or partially bounded by two facing surfaces (16, 18) which are relatively closely spaced, said gas laser apparatus being characterised by the provision of electrode means (36,38) for establishing an electric field (39), said electrode means being elongated, and an electric discharge (58) within the cavity (24), the orientation of the electric field (39) being substantially parallel to the facing surfaces (16, 18), and by the provision of means (26, 28) for establishing a magnetic field (42) within the cavity (24) with at least a major vector component substantially perpendicular to the facing surfaces (16, 18), whereby in operation the electric discharge (58) becomes a sweeping discharge between said two facing surfaces, said sweeping discharge being spread over a distance substantially greater than the separation of said facing surfaces (16, 18).

2. A gas laser apparatus (10) as claimed in claim 1, further characterised in that the means (26, 28) for producing the magnetic field (42) produce a magnetic field of strength in excess of a strength required to cause discrete moving discharge components (58A, 58C, 58E) of said sweeping discharge (58) to move a distance equal to the separation distance between said facing surfaces (16, 18) in a time equal to the thermal time constant of a gas between said facing surfaces (16, 18).

3. A gas laser apparatus (10) as claimed in claim 1, further characterised in that the means (26,28) for producing the magnetic field produces a magnetic field (39) of sufficient strength to merge at least a substantial portion of said sweeping discharge (58) into a generally uniform discharge (58Z, 58T).

4. A gas laser apparatus (10) as claimed in claim 2 further characterized in that the means (26, 28) for producing the magnetic field produce a magnetic field in the range from 0.008T to 2.2T (80 gauss to 22,000 gauss).

5. A gas laser apparatus (10) as claimed in any preceding claim, further characterized by the provision of means (34, 37, 71 to 78) for cooling at least one of said facing surfaces (16, 18), said means for cooling (34, 37, 71 to 78) constituting a primary means for cooling gas in the cavity (24) heated by the electrical discharge (58).

6. A gas laser apparatus (10) as claimed in any preceding claim further characterized in that surfaces (16, 18) are effectively electrically insulating.

7. A gas laser apparatus (10) as claimed in any preceding claim, further characterized in that the electrode means (36, 38) comprise at least two elongated electrode regions, each said elongated electrode region comprising a set of two or more electrodes, at least one electrode (40) of one set and an adjacent electrode (36A) of another set having the ends thereof in closer spaced relation to each other than do the ends of the remainder of the said one set with the ends of the remainder of said another set, whereby the initiation of the electric discharge (58) is facilitated.

8. A gas laser apparatus (10) as claimed in any of claims 1 to 7, characterized in that the electrode means (36, 38) comprise at least two electrodes within the cavity (24) forming two elongate electrode regions and further characterized by ballast means (46, 48) associated with at least one electrode so as to distribute said electric discharge (58) over a substantial portion of at least one of said elongated electrode regions (36, 38).

9. A gas laser apparatus (10) as claimed in any preceding claim, further characterized in that said electrode means for providing said electric field has substantially non-reversing polarity, thereby producing a substantially direct current electric discharge (58).

10. A gas laser apparatus (10) as claimed in any preceding claim, further characterized in that said electrode means for providing said electric field has equipotential lines which form closed loops inside said cavity (24).

11. A gas laser apparatus (10) as claimed in any of claims 1 to 9, further characterized in that said electrode means for providing said electric field has equipotential lines which are open loops inside said cavity (24) with an electric field gradient sufficient for maintaining continuous initiation of electrical discharges (58) within said cavity (24).

12. A gas laser apparatus (10) as claimed in any preceding claim, further characterized in that said facing surface (16, 18) are substantially planar and parallel surfaces of substantially equal surface dimension.

13. A gas laser apparatus (10) as claimed in any of claims 1 to 11, further characterized in that said surfaces (16T, 18T) are substantially cylindrical and coaxially positioned.

14. A gas laser apparatus (10) as claimed in claim 1, further characterized in that said cavity (24) is a cylindrical tube (24T) and said electrode means (36, 38) are positioned in such a way as to establish an electric field (39T) which is generally parallel to the axis of said cylindrical tube cavity (24T).

15. A gas laser apparatus (10) as claimed in any preceding claim, further characterized in that said means (26T, 28T) for establishing a magnetic field includes at least one magnet together with ferromagnetic material (series 30, 31, 32, 33, 12, 14) co-positioned to form a magnetic circuit which distributes said magnetic field in said cavity (24T).

16. A gas laser apparatus (10) as claimed in claim 15, further characterized in that said magnetic circuit includes a ferromagnetic substantially tubular shaped structure (30, 31, 32, 33, and 30P, 31P, 32P, 33P) which surrounds the said at least one magnet (26, 28, 28P) and said cavity (24, 24P).

17. A gas laser apparatus (10) as claimed in claim 15, further characterised in that said magnetic circuit includes at least two concentric ferromagnetic cylinders (32A, 30T) with at least a portion of said cavity (24T) located in at least a portion of the volume between said concentric cylinders (32A, 30T).

18. A gas laser apparatus (10) as claimed in any preceding claim, further characterized in that said means for establishing a magnetic field includes one or more permanent magnets.

19. A method of producing a substantially uniform broad area electric discharge, said method comprising the steps of:
   providing a gas filled cavity (24) between two relatively closely spaced surfaces (16, 18); providing electrode means (36, 38), said electrode means being elongated; and
   providing a magnetic field (42) in a direction substantially orthogonal to said surfaces (16, 18); said method being characterised in that it further comprises
   providing at least one electrical discharge (58) within said gas filled cavity (24) oriented with an electric field (39) thereof substantially parallel to said facing surfaces (16, 18) to enable said magnetic field to act on said electric discharge and to produce a generally stable sweeping electric discharge which is spread, transverse to the electric field, over a distance substantially greater than the separation between said facing surfaces (16, 18) , thereby creating a substantially uniform broad area electric discharge (58Z, 58T).

20. A method as claimed in claim 19, further characterized by the step of providing said broad area electrical discharge (58Z, 58T) includes the positioning of electrodes (36, 38) within the cavity (24) and applying electrical power to said electrodes (36, 38).

21. A method as claimed in claim 20 further characterized in that the step of establishing a magnetic field includes backing at least one of said facing surfaces (16, 18) with ferromagnetic material (12, 14, 30, 32) and positioning at least one magnet (26, 28) adjacent at least to a portion of said ferromagnetic material (12, 14, 30, 32).

22. A method as claimed in any of claims 19 to 21 further characterized in that said surfaces (16, 18) are substantially electrically insulating, planar, parallel and closely spaced relative to the surface dimensions thereof.

23. A method as claimed in any of claims 19 to 21, further characterized by providing said surfaces (16T, 18T) to be substantially electrically insulating, substantially cylindrical and substantially coaxial and closely spaced relative to the dimensions thereof.

24. A method as claimed in claim 23, further characterized by the step of providing said broad area electrical discharges (58T) including positioning at least two electrode rings (36T, 38T) coaxial with said surfaces (16T, 18T).

25. A method as claimed in any of claims 19 to 24, further characterized by the step of cooling at least one of said surfaces (16, 18).

26. A method as claimed in claim 24, further characterized in that the step of providing a magnetic field (42T) includes positioning at least one magnet (26T, 28T) and at least one ferromagnetic cylinder (32A,B,C, 30T) behind at least one of said surfaces (16T, 18T) to establish a radial magnetic field (42T).

27. A method as claimed in claim 20 wherein the step of positioning of electrodes is further characterized by forming two opposed elongated electrode regions (36, 38) providing distributed electrical ballasting (46, 48) for the purpose of spreading the said electrical discharge (58) over at least a substantial length of at least one of said elongated electrode regions (36, 38).

28. A method as claimed in claim 27 wherein the step of positioning of electrodes is further characterized by at least one of said elongated electrode regions (36, 38) having an electrode component (40) which is a closer spaced relation to the oppositely charged electrode region (36) whereby the initiation of the electric discharge (58Z) is facilitated.

**Patentansprüche**

1. Gaslaser-Vorrichtung (10) mit einem Resonator (24), wobei der Resonator (24) begrenzt oder teilweise begrenzt ist durch zwei sich gegenüberliegende Oberflächen (16, 18), die relativ eng beabstandet sind, wobei die Gaslaser-Vorrichtung gekennzeichnet ist durch das Vorhandensein von Elektrodeneinrichtungen (36, 38) zum Herstellen eines elektrischen Feldes (39), wobei die Elektrodeneinrichtungen langgestreckt sind, und einer elektrischen Entladung (58) in dem Resonator (24), wobei die Ausrichtung des elektrischen Feldes (39) im wesentlichen parallel zu den sich gegenüberliegenden Oberflächen (16, 18) ist, und durch das Vorhandensein einer Einrichtung (26, 28) zum Herstellen eines Magnetfeldes (42) in dem Resonator (24) mit mindestens einer Hauptvektorkomponente, die im wesentlichen rechtwinklig zu den sich gegenüberliegenden Oberflächen (16, 18) ist, wobei die elektrische Entladung (58) in Betrieb Zu einer Wobbelentladung zwischen den beiden sich gegenüberliegenden Oberflächen wird, wobei die Wobbelentladung sich über eine Entfernung ausbreitet, die im wesentlichen größer ist als der Abstand zwischen den sich gegenüberliegenden Oberflächen (16, 18).

2. Gaslaser-Vorrichtung (10) nach Anspruch 1, ferner dadurch gekennzeichnet, daß die Einrichtung (26, 28) zum Erzeugen des Magnetfeldes (42) ein Magnetfeld mit einer Stärke erzeugt, die größer ist als eine Stärke, die erforderlich ist, damit sich diskrete, sich bewegende Entladungskomponenten (58A, 58C, 58E) der Wobbelentladung (58) über eine Entfernung bewegen, die gleich dem Abstand zwischen den sich gegenüberliegenden Oberflächen (16, 18) ist in einer Zeit, die gleich der thermischen Zeitkonstante eines Gases zwischen den sich gegenüberliegenden Oberflächen (16, 18) ist.

3. Gaslaser-Vorrichtung (10) nach Anspruch 1, ferner dadurch gekennzeichnet, daß die Einrichtung (26, 28) zum Erzeugen des Magnetfeldes ein Magnetfeld (39) mit einer ausreichenden Stärke erzeugt, um mindestens einen wesentlichen Teil der Wobbelentladung (58) in eine im allgemeinen gleichmäßige Entladung (58Z, 58T) einzumischen.

4. Gaslaser-Vorrichtung (10) nach Anspruch 2, ferner dadurch gekennzeichnet, daß die Einrichtung (26, 28) zum Erzeugen des Magnetfeldes ein Magnetfeld im Bereich von 0,008 Tesla bis 2,2 Tesla (80 Gauß bis 22.000 Gauß) erzeugt.

5. Gaslaser-Vorrichtung (10) nach einem der vorangegangenen Ansprüche, ferner gekennzeichnet durch das Vorhandensein von Einrichtungen (34, 37, 71 bis 78) zum Kühlen mindestens einer der sich gegenüberliegenden Oberflächen (16, 18), wobei die Einrichtungen zum Kühlen (34, 37, 71 bis 78) eine Primäreinrichtung zum Kühlen von Gas in dem Resonator (24) darstellen, der durch die elektrische Entladung (58) erwärmt wird.

6. Gaslaser-Vorrichtung (10) nach einem der vorangegangenen Ansprüche, ferner dadurch gekennzeichnet, daß die Oberflächen (16, 18) wirksam elektrisch isoliert sind.

7. Gaslaser-Vorrichtung (10) nach einem der vorangegangenen Ansprüche, ferner dadurch gekennzeichnet, daß die Elektrodeneinrichtungen (36, 38) mindestens zwei langgestreckte Elektrodenbereiche aufweisen, wobei jeder der langgestreckten Elektrodenbereiche eine Gruppe von zwei oder mehr Elektroden aufweist, wobei mindestens eine Elektrode (40) einer Gruppe und eine benachbarte Elektrode (36A) einer anderen Gruppe Enden aufweisen, die ein enger beabstandetes Verhältnis zueinander haben, als es die Enden der übrigen der einen Gruppe mit den Enden der übrigen der anderen Gruppe haben, wodurch die Auslösung der elektrischen Entladung (58) erleichtert wird.

8. Gaslaser-Vorrichtung (10) nach einem der Ansprüche 1 bis 7, dadurch gekennzeichnet, daß die Elektrodeneinrichtungen (36, 38) mindestens zwei Elektroden in dem Resonator (24) aufweisen, die zwei langgestreckte Elektrodenbereiche bilden, und ferner gekennzeichnet durch Widerstandseinrichtungen (46, 48), die mindestens zu einer Elektrode gehören, um die elektrische Entladung (58) über einen wesentlichen Teil mindestens eines der langgestreckten Elektrodenbereiche (36, 38) zu verteilen.

9. Gaslaser-Vorrichtung (10) nach einem der vorangegangenen Ansprüche, ferner dadurch gekennzeichnet, daß die Elektrodeneinrichtungen zum Erzeugen des elektrischen Feldes im wesentlichen sich nicht umkehrende Polarität aufweisen und dadurch im wesentlichen eine elektrische Gleichstromladung (58) erzeugen.

10. Gaslaser-Vorrichtung (10) nach einem der vorangegangenen Ansprüche, ferner dadurch gekennzeichnet, daß die Elektrodeneinrichtungen zum Erzeugen des elektrischen Feldes Äquipotentiallinien aufweisen, die in dem Resonator (24) geschlossene Kreise bilden.

11. Gaslaser-Vorrichtung (10) nach einem der Ansprüche 1 bis 9, ferner dadurch gekennzeichnet, daß die Elektrodeneinrichtungen zum Erzeugen des elektrischen Feldes Äquipotentiallinien aufweisen, die in dem Resonator (24) offene Kreise bilden, wobei ein Gradient des elektrischen Feldes ausreicht zum Beibehalten einer kontinuierlichen Auslösung von elektrischen Entladungen (58) in dem Resonator (24).

12. Gaslaser-Vorrichtung (10) nach einem der vorangegangenen Ansprüche, ferner dadurch gekennzeichnet, daß die sich gegenüberliegenden Oberflächen (16, 18) im wesentlichen ebene und parallele Oberflächen mit im wesentlichen gleichen Oberflächenabmessungen sind.

13. Gaslaser-Vorrichtung (10) nach einem der Ansprüche 1 bis 11, ferner dadurch gekennzeichnet, daß die Oberflächen (16T, 18T) im wesentlichen zylindrisch sind und koaxial positioniert sind.

14. Gaslaser-Vorrichtung (10) nach Anspruch 1, ferner dadurch gekennzeichnet, daß der Resonator (24) eine zylindrische Röhre (24T) ist und die Elektrodeneinrichtungen (36, 38) derartig positioniert sind, daß ein elektrisches Feld (39T) hergestellt wird, das im allgemeinen parallel zu der Achse des Zylinderröhrenresonators (24T) ist.

15. Gaslaser-Vorrichtung (10) nach einem der vorangegangenen Ansprüche, ferner dadurch gekennzeichnet, daß die Einrichtung (26T, 28T) zum Herstellen eines Magnetfeldes mindestens einen Magneten zusammen mit einem entsprechend positionierten ferromagnetischen Material (mit der Folge 30, 31, 32, 33, 12, 14) aufweist, um einen Magnetkreis zu bilden, der das Magnetfeld in dem Resonator (24T) verteilt.

16. Gaslaser-Vorrichtung (10) nach Anspruch 15, ferner dadurch gekennzeichnet, daß der Magnetkreis eine ferromagnetische, im wesentlichen röhrenförmige Struktur (30, 31, 32, 33 und 30P, 31P, 32P, 33P) aufweist, die mindestens den einen Magneten (26, 28, 28P) und den Resonator (24, 24P) umgibt.

17. Gaslaser-Vorrichtung (10) nach Anspruch 15, ferner dadurch gekennzeichnet, daß der Magnetkreis mindestens zwei konzentristhe ferromagnetische Zylinder (32A, 30T) aufweist, wobei mindestens ein Teil des Resonators (24T) mindestens in einem Teil des Volumens zwischen den konzentrischen Zylindern (32A, 30T) angeordnet ist.

18. Gaslaser-Vorrichtung (10) nach einem der vorangegangenen Ansprüche, ferner dadurch gekennzeichnet, daß die Einrichtung zum Herstellen eines Magnetfeldes einen oder mehrere Dauermagneten aufweist.

19. Verfahren zum Herstellen einer elektrischen Entladung auf einer im wesentlichen gleichmäßigen, breiten fläche, mit den folgenden Schritten:

Bereitstellen eines gasgefüllten Resonators (24) zwischen zwei relativ eng beabstandeten Oberflächen (16, 18); Bereitstellen von Elektrodeneinrichtungen (36, 38), wobei die Elektrodeneinrichtungen langgestreckt sind; und

Bereitstellen eines Magnetfeldes (42) in einer Richtung, die im wesentlichen rechtwinklig zu den Oberflächen (16, 18) ist; wobei das Verfahren dadurch gekennzeichnet ist, daß es ferner folgendes aufweist:

Bereitstellen mindestens einer elektrischen Entladung (58) in dem gasgefüllten Resonator (24), der mit einem elektrischen Feld (39) im wesentlichen parallel zu den sich gegenüberliegenden Oberflächen (16, 18) ausgerichtet ist, damit das Magnetfeld auf die elektrische Entladung reagieren und eine im allgemeinen stabile elektrische Wobbelentladung erzeugen kann, die sich quer zu dem elektrischen Feld über eine Entfernung ausbreitet, die im wesentlichen größer ist als der Abstand zwischen den sich gegenüberliegenden Oberflächen (16, 18), wodurch eine elektrische Entladung auf einer im wesentlichen gleichmäßigen, breiten Fläche (58Z, 58T) erzeugt wird.

20. Verfahren nach Anspruch 19, ferner dadurch gekennzeichnet, daß der Schritt des Bereitstellens einer breitflächigen elektrischen Entladung (58Z, 58T) die Positionierung der Elektroden (36, 38) in dem Resonator (24) und das Anlegen elektrischer Leistung an die Elektroden (36, 38) aufweist.

21. Verfahren nach Anspruch 20, ferner dadurch gekennzeichnet, daß der Schritt des Herstellens eines Magnetfeldes das Unterstützen mindestens einer der sich gegenüberliegenden Oberflächen (16, 18) mit ferromagnetischem Material (12, 14, 30, 32) und das Positionieren mindestens eines Magneten (26, 28) in der Nähe mindestens eines Teils des ferromagnetischen Materials 12, 14, 30, 32) einschließt.

22. Verfahren nach einem der Ansprüche 19 bis 21, ferner dadurch gekennzeichnet, daß die Oberflächen (16, 18) im wesentlichen elektrisch isolierend, eben, parallel und eng beabstandet in bezug auf die Oberflächenabmessungen sind.

23. Verfahren nach einem der Ansprüche 19 bis 21, ferner dadurch gekennzeichnet, daß erreicht wird, daß die Oberflächen (16T, 18T) im wesentlichen elektrisch isolierend, im wesentlichen zylindrisch und im wesentlichen koaxial und eng beabstandet in bezug auf die Abmessungen sind.

24. Verfahren nach Anspruch 23, ferner gekennzeichnet durch den Schritt des Bereitstellens einer breitflächigen elektrischen Entladung (58T) einschließlich des Positionierens von mindestens zwei Elektrodenringen (36T, 38T) koaxial mit den Oberflächen (16T, 18T).

25. Verfahren nach einem der Ansprüche 19 bis 24, ferner gekennzeichnet durch den Schritt des Abkühlens mindestens einer der Oberflächen (16, 18).

26. Verfahren nach Ansprüche 24, ferner dadurch gekennzeichnet, daß der Schritt des Bereitstellens eines Magnetfeldes (42T) das Positionieren mindestens eines Magneten (26T, 28T) und mindestens eines ferromagnetischen Zylinders (32A,B,C, 30T) hinter mindestens einer der Oberflächen (16T, 18T) einschließt, um ein radiales Magnetfeld (42T) herzustellen.

27. Verfahren nach Anspruch 20, wobei der Schritt des Positionierens der Elektroden ferner gekennzeichnet ist durch das Ausbilden von zwei sich gegenüberliegenden langgestreckten Elektrodenbereichen (36, 38), die verteilte elektrische Widerstände (46, 48) zum Zweck des Ausbreitens der elektrischen Entladung (58) über mindestens eine wesentliche Länge mindestens eines der langgestreckten Elektrodenbereiche (36, 38) darstellen.

28. Verfahren nach Anspruch 27, wobei der Schritt des Positionierens der Elektroden ferner dadurch gekennzeichnet ist, daß mindestens einer der langgestreckten Elektrodenbereiche (36, 38) eine Elektrodenkomponente (40) aufweist, die ein enger beabstandetes Verhältnis zu dem umgekehrt geladenen Elektrodenbereich (36) hat, wodurch das Auslösen der elektrischen Entladung (58Z) erleichtert wird.

**Revendications**

1. Appareil laser à gaz (10) comportant une cavité (24), ladite cavité (24) étant délimitée ou partiellement délimitée par deux surfaces opposées (16, 18) qui sont relativement proches l'une de l'autre, ledit appareil laser à gaz étant caractérisé par le fait de procurer des moyens d'électrodes (36, 38) pour établir un champ électrique (39), lesdits moyens d'électrodes étant allongés, ainsi qu'une décharge électrique (58) à l'intérieur de la cavité (24), l'orientation du champ électrique (39) étant essentiellement parallèle aux surfaces opposées (16, 18), et par le fait de procurer des moyens (26, 28) pour établir un champ magnétique (42) à l'intérieur de la cavité (24) comprenant au moins un composant vectoriel majeur essentiellement perpendiculaire aux surfaces opposées (16, 18), par lequel, lors de la mise en service, la décharge électrique (58) devient une décharge par balayage entre lesdites deux surfaces opposées, ladite décharge par balayage s'étendant sur une distance essentiellement supérieure à celle qui sépare lesdites surfaces opposées (16, 18).

2. Appareil laser à gaz (10) selon la revendication 1, caractérisé en outre en ce que les moyens (26, 28) pour produire le champ magnétique (42) produisent un champ magnétique dont l'intensité dépasse celle requise pour amener des composants de décharge discrets mobiles (58A, 58C, 58E) de ladite décharge (58) par balayage à se déplacer sur une distance égale à la distance séparant lesdites surfaces opposées (16, 18) en un temps égal à l'inertie thermique d'un gaz entre lesdites surfaces opposées (16, 18).

3. Appareil laser à gaz (10) selon la revendication 1, caractérisé en outre en ce que les moyens (26, 28) pour produire le champ magnétique produisent un champ magnétique (39) dont l'intensité est suffisante pour fusionner au moins une portion importante de ladite décharge (58) par balayage en une décharge généralement uniforme (58Z, 58T).

4. Appareil laser à gaz (10) selon la revendication 2, caractérisé en outre en ce que les moyens (26, 28) pour produire le champ magnétique produisent un champ magnétique dans le domaine de 0,008T à 2,2T (80 gauss à 22.000 gauss).

5. Appareil laser à gaz (10) selon l'une quelconque des revendications précédentes, caractérisé en outre par le fait de procurer des moyens (34, 37, 71 à 78) pour refroidir au moins une desdites surfaces opposées (16, 18), lesdits moyens réfrigérants (34, 37, 71 à 78) constituant un premier moyen pour refroidir le gaz dans la cavité (24) chauffé par la décharge électrique (58).

6. Appareil laser à gaz (10) selon l'une quelconque des revendications précédentes, caractérisé en outre en ce que les surfaces (16, 18) procurent une isolation électrique efficace.

7. Appareil laser à gaz (10) selon l'une quelconque des revendications précédentes, caractérisé en outre en ce que les moyens d'électrodes (36, 38) comprennent au moins deux régions d'électrodes allongées, chacune desdites régions d'électrodes allongées comprenant un ensemble de deux électrodes ou plus, les extrémités d'au moins une électrode (40) faisant partie d'un ensemble et d'une électrode adjacente (36A) faisant partie d'un autre ensemble étant moins écartées l'une de l'autre que les extrémités du reste du premier ensemble et celles du reste dudit autre ensemble, facilitant ainsi le déclenchement de la décharge électrique (58).

8. Appareil laser à gaz (10) selon l'une quelconque des revendications 1 à 7, caractérisé en ce que les moyens d'électrodes (36, 38) comprennent au moins deux électrodes à l'intérieur de la cavité (24) formant deux régions d'électrodes allongées, et caractérisé en outre par des moyens de ballast (46, 48) associés à au moins une électrode, de façon à répartir la décharge électrique (58) sur une portion importante d'au moins une desdites régions d'électrodes allongées (36, 38).

9. Appareil laser à gaz (10) selon l'une quelconque des revendications précédentes, caractérisé en outre en ce que lesdits moyens d'électrodes pour procurer ledit champ électrique possèdent une polarité essentiellement non réversible procurant ainsi une décharge électrique (58) essentiellement à courant continu.

10. Appareil laser à gaz (10) selon l'une quelconque des revendications précédentes, caractérisé en outre en ce que lesdits moyens d'électrodes pour procurer ledit champ électrique possèdent des courbes équipotentielles qui constituent des boucles fermées à l'intérieur de ladite cavité (24).

11. Appareil laser à gaz (10) selon l'une quelconque des revendications 1 à 9, caractérisé en outre en ce que lesdits moyens d'électrodes pour procurer ledit champ électrique possèdent des courbes équipotentielles qui constituent des boucles ouvertes à l'intérieur de ladite cavité (24) avec un gradient de champ électrique suffisant pour maintenir un déclenchement en continu des décharges électriques (58) à l'intérieur de ladite cavité (24).

12. Appareil laser à gaz (10) selon l'une quelconque des revendications précédentes, caractérisé en outre en ce que lesdites surfaces opposées (16, 18) sont des surfaces essentiellement planes et parallèles, d'une dimension de surface essentiellement égale.

13. Appareil laser à gaz (10) selon l'une quelconque des revendications 1 à 11, caractérisé en outre en ce que lesdites surfaces (16T, 18T) sont essentiellement cylindriques et disposées en position coaxiale.

14. Appareil laser à gaz (10) selon la revendication 1, caractérisé en outre en ce que ladite cavité (24) est un tube cylindrique (24T) et lesdits moyens d'électrodes (36, 38) sont positionnés de façon à établir un champ électrique (39T) qui est généralement parallèle à l'axe de ladite cavité (24T) en forme de tube cylindrique.

15. Appareil laser à gaz (10) selon l'une quelconque des revendications précédentes, caractérisé en outre en ce que lesdits moyens (26T, 28T) pour établir un champ magnétique englobent au moins un aimant conjointement avec une matière ferromagnétique (séries 30, 31, 32, 33, 12, 14) positionnés pour former un circuit magnétique qui répartit ledit champ magnétique dans ladite cavité (24T).

16. Appareil laser à gaz (10) selon la revendication 15, caractérisé en outre en ce que ledit circuit magnétique englobe une structure ferromagnétique de forme essentiellement tubulaire (30, 31, 32, 33 et 30P, 31P, 32P, 33P) qui entoure le ou lesdits aimants (26, 28, 28P) et ladite cavité (24, 24P).

17. Appareil laser à gaz (10) selon la revendication 15, caractérisé en outre en ce que ledit circuit magnétique englobe au moins deux cylindres ferromagnétiques concentriques (32A, 30T), au moins une portion de ladite cavité (24T) étant disposée dans au moins une portion du volume ménagé entre lesdits cylindres concentriques (32A, 30T).

18. Appareil laser à gaz (10) selon l'une quelconque des revendications précédentes, caractérisé en outre en ce que lesdits moyens pour établir un champ magnétique englobent un ou plusieurs aimants permanents.

19. Procédé pour procurer une décharge électrique essentiellement uniforme à aire étendue, ledit procédé comprenant les étapes consistant à:

procurer une cavité (24) remplie de gaz entre deux surfaces (16, 18) relativement proches l'une de l'autre; procurer des moyens d'électrodes (36, 38), lesdits moyens d'électrodes étant allongés; et

procurer un champ magnétique (42) dans une direction essentiellement perpendiculaire auxdites surfaces (16, 18); ledit procédé étant caractérisé en ce qu'il comprend, en outre:

le fait de procurer au moins une décharge électrique (58) à l'intérieur de ladite cavité (24) remplie de gaz, orientée de telle sorte que son champ magnétique (39) soit essentiellement parallèle auxdites surfaces opposées (16, 18) pour permettre audit champ magnétique d'agir sur ladite décharge électrique et pour produire une décharge électrique par balayage généralement stable qui s'étend, transversalement par rapport au champ électrique, sur une distance essentiellement supérieure à la distance séparant lesdites surfaces opposées (16, 18) en créant ainsi une décharge électrique essentiellement uniforme (58Z, 58T) à aire étendue.

20. Procédé selon la revendication 19, caractérisé en outre par le fait que l'étape consistant à procurer ladite décharge électrique (58Z, 58T) à aire étendue englobe le positionnement d'électrodes (36, 38) à l'intérieur de la cavité (24) et l'application d'énergie électrique auxdites électrodes (36, 38).

21. Procédé selon la revendication 20, caractérisé en outre en ce que l'étape consistant à établir un champ magnétique englobe le fait de disposer au dos d'au moins une desdites surfaces opposées (16, 18) une matière ferromagnétique (12, 14, 30, 32) et le fait de disposer au moins un aimant (26, 28) en position adjacente à au moins une portion de ladite matière ferromagnétique (12, 14, 30, 32).

22. Procédé selon l'une quelconque des revendications 19 à 21, caractérisé en outre en ce que lesdites surfaces (16, 18) sont essentiellement électriquement isolantes, planes, parallèles et proches l'une de l'autre par rapport à leurs dimensions de surface.

23. Procédé selon l'une quelconque des revendications 19 à 21, caractérisé en outre par le fait de faire en sorte que lesdites surfaces (16T, 18T) soient essentiellement électriquement isolantes, essentiellement cylindriques et essentiellement coaxiales, et proches l'une de l'autre par rapport à leurs dimensions.

24. Procédé selon la revendication 23, caractérisé en outre par le fait que l'étape consistant à procurer ladite décharge électrique (58T) à aire étendue englobe le positionnement d'au moins deux anneaux d'électrodes (36T, 38T) coaxiaux auxdites surfaces (16T, 18T).

25. Procédé selon l'une quelconque des revendications 19 à 24, caractérisé en outre par l'étape consistant à refroidir au moins une desdites surfaces (16, 18).

26. Procédé selon la revendication 24, caractérisé en outre en ce que l'étape consistant à procurer un champ magnétique (42T) englobe le fait de positionner au moins un aimant (26T, 28T) et au moins un cylindre ferromagnétique (32A,B,C, 30T) derrière au moins une desdites surfaces (16T, 18T) pour établir un champ magnétique radial (42T).

27. Procédé selon la revendication 20, dans lequel l'étape de positionnement des électrodes est en outre caractérisée par le fait de former deux régions d'électrodes opposées allongées (36, 38) procurant un ballastage électrique réparti (46, 48) afin d'étendre ladite décharge électrique (58) sur au moins une longueur importante d'au moins une desdites régions d'électrodes allongées (36, 38).

28. Procédé selon la revendication 27, dans lequel l'étape de positionnement des électrodes est en outre caractérisé par le fait qu'au moins un desdites régions d'électrodes allongées (36, 38) comporte un composant d'électrode (40) qui est plus proche de la région d'électrode (36) de charge opposée, ce qui permet de faciliter le déclenchement de la décharge électrique (58Z).

FIG. 1.

FIG. 2.

FIG. 3

FIG. 4.

FIG. 5.

FIG. 6.

FIG. 7.

FIG. 8.